# EUROPEAN PATENT SPECIFICATION

(11) **EP 0 383 735 B1**
(45) Date of publication and mention of the grant of the patent: **14.07.1993**
(21) Application number: 90850031.7
(22) Date of filing: 24.01.1990
(51) Int. Cl.: B23B 31/26, B23Q 3/12

(54) **Tool clamping device**
Werkzeugspannvorrichtung
Dispositif de serrage d'outil

(30) Priority: 01.02.1989 SE 8900342
(43) Date of publication of application: 22.08.1990
(73) Proprietor: SANDVIK AKTIEBOLAG, 811 81 Sandviken (SE)
(72) Inventor: Asberg, Lars Gunnar, S-810 28 Järbo (SE)
(74) Representative: Taquist, Lennart

(56) References cited:
- DE-U- 8 700 618
- US-A- 2 713 811
- US-A- 3 651 739

## Description

The present invention relates to a clamping device for machine tools comprising a draw bar that is axially reciprocable inside the machine spindle and arranged to support a conical tool arbor by means of a releasably and coaxially clamped sleeve.

There is an increased demand for tool clamping devices that are reliable in tooling machines. Usually the tool is carried by a conical portion which is aimed to centralize the tool in the spindle and to absorb the radial and axial forces that are acting on the tool. There is also an increased demand for devices that enable tool changes to be made automatically in tooling machines.

One known clampling device is described in US-A-2713811. According to this construction, the draw tap is carried by a clamping sleeve by means of locking balls. However, due to the small contact points between the balls and the sleeve and/or the draw tap, and in view of the very large tensile forces, the balls will soon cause damages like intrusions on the contacted areas.

It is therefore a purpose of the present invention to provide a clamping device that enables transmission of much larger tensile forces than what is possible with other commercially available devices.

It is another purpose of the invention to provide a tool clamping device which requires less space than those hitherto available.

It is another purpose of the invention to provide such a clamping device that enables a short axial displacement of the clamping sleeve in connection with change of tools.

It is yet another purpose of the invention to provide a clamping device that consists of a few details thus enabling simplified construction of the device.

The invention will now be described more in detail in connection with the embodiment illustrated on the enclosed drawings.

Fig. 1 shows a longitudinal section of a tool machine spindle and a clamping device provided therein, in accordance with one embodiment of the invention.

Fig. 2 shows a plan view along the line II-II in Fig. 1 of a clamp ring which is one part of the clamping device.

Fig. 3 is a side view of a draw tap which is part of the clamping device.

Fig. 4 shows, to the left of the centre line, the device of Fig. 1-3 in its clamped position and to the right of the centre line, the device in its released position.

In the Figures there is illustrated a tool machine spindle at 10. The spindle is operated in a conventional manner and therefore the means used therefor are not illustrated. A conical arbor 12 which is symmetrical around a central axis 11 has been received in a correspondingly conically designed recess 13 in the machine spindle 10. The conical arbor 12 is intended to carry a tool (not shown) in one end portion at which there is also provided a carrying flange 14. In its opposite end portion the tool arbor is provided with a threaded bore 15 in which a draw tap 17 having external threads 16 is intended to be threadably engaged. Alternatively, the lower end of said draw tap could be made integral with the conical arbor 12 or it could be releasably connected with the arbor with some other type of clamping means.

A clamping device which carries a tool and a conical arbor is provided inside the machine spindle, said clamping device comprising a draw bar 18 the lower end of which carries a radial flange portion 19 which is provided with an external thread 20 to be threadably connected with a corresponding internally threaded portion 21 of a clamping sleeve 22 which is arranged coaxially in relation to the draw bar whereby an elastic locking ring 24 is received in an interior recess 23 of said sleeve. The locking ring 24 has in its released position an exterior diameter corresponding with the diameter of said recess 23. The conical arbor 12 is carried by the draw tap 17 which is carried in the clamping sleeve 22 by arranging the locking ring 24 such that it is partially received in annular recess 25 on the draw tap whilst being in supporting abutment with an abutment surface 26' provided by narrowing the entrance bore of said sleeve by means of a radially inwards extending flange portion 27. This abutment surface 26' is provided as the lower end portion of an inclined transition surface 26'' between the central hole 23 of the sleeve and the axially extending inner surface 28 of said flange portion 27. It is important that said abutment surface 26' has a smoothly rounded profile which as closely as possible corresponds with the profile of the locking ring 24. This enables provision of a sufficiently large contact surface which reduces the surface pressure. It is important that the material in said abutment surface 26', the material in the metal segments 39 of said clamping ring and the material in the annular recess 25 of said draw bar are made of hardened material which facilitates maintenance of desired dimensional limitations of the device.

A supporting element 29 is also received in the hole of the sleeve 22 consisting of a central neck portion 30 and a lower radially enlarged portion 31 so that a radial abutment 32 is obtained against which a number of spring washers 33 are resting. The lower end surface of said supporting element 29 is intended to abut against the locking ring 24.

In direction upwards the spring washers 33 are supported against a radially extending washer 34 which is located around the neck portion 30 and secured against axial displacement by means of an annular snap ring 35 or similar device.

The supporting element 29 has the function of being an abutment for the locking ring 24 during the engagement phase. Thus, it shall accomplish a holding-up force which is larger than the axial force which by friction and impact of the conical angle of surface 26 affects the locking ring when the clamping sleeve is displaced backwards. Hence, it must be fixed axially which is accomplished by providing a number of pins 37 received in bores 36 around the flange portion 19 which via the washer 34 and the biassed spring washers 33 keeps it in position in relation to the spindle 10.

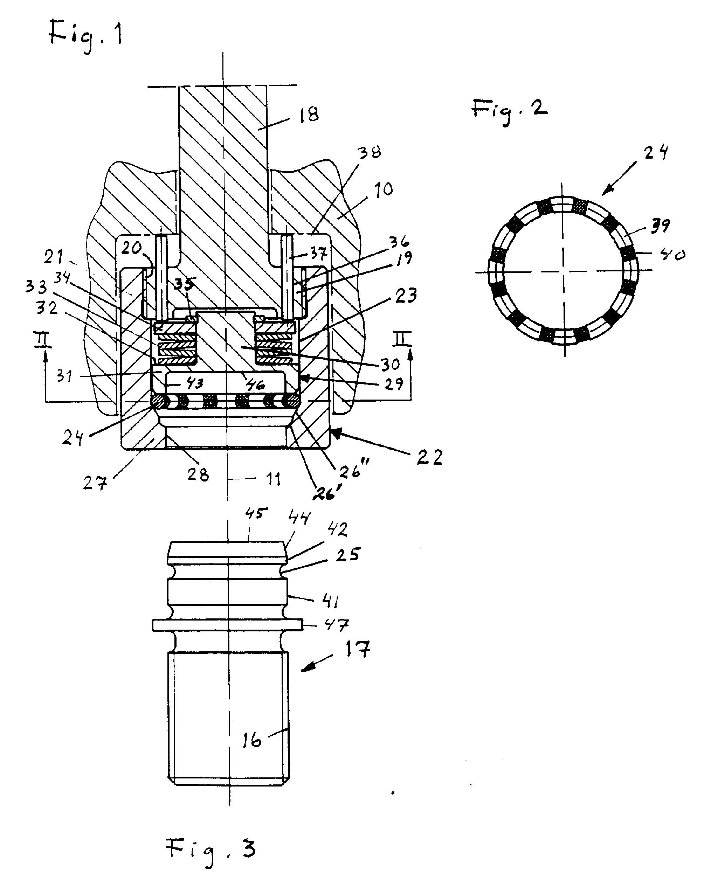

A locking ring 24 is provided for the purpose of carrying the tool arbor 12 and the draw tap 17 connected therewith. This locking 24 is preferably in the shape of an O-ring composed of a number of spaced metal segments 39 which are kept together in O-ring fashion by vulcanized rubber segments 40 in the manner shown in Fig.2. This gives the ring 24 the ability to be compressed whilst having a sufficiently good carrying ability such as to axially carry the tool arbor 12 via the draw tap 17.

The draw tap 17 is provided with an annular recess 25 for the receipt of the locking ring 24 on both sides of which axially extending guide surfaces 41 and 42 are provided. The axially lower guide surface 41 is intended to slide against inner surface 28 of clamping sleeve 22 with a clearance fit whereas the upper guide surface 42 is similarly intended to slide against the interior axial surface 28 of clamping sleeve during the assembling phase. The draw tap 17 is additionally provided with an entering beveled portion 44 the axial extent of which is selected so that at completion of the clamping of the tool arbor 12 by means of the draw bar 18 the upper end surface 45 of the draw tap 17 which extends perpendicularly from the central axis 11 is brought into abutment with a centrally located end surface 46 of the supporting element 29. It is found to be suitable to make the depth of the recess 25 in the draw tap 17 essentially equal with or somewhat less than one half of the cross sectional diameter of the locking ring 24. Furhter, both guide surfaces 41 and 42 of the draw tap 17 ought to be concentrical with same diameter in order to facilitate for the entrance and assembly of the draw tap into the clamping sleeve 22. In order to be able of clearly defining the axial position of the draw tap in relation to the conical arbor 12 the draw tap 17 is provided with a radial flange 47 located between the upper termination of threaded portion 16 and the guide surface 41, whereby said flange is arranged to abut against the end surface 48 of the arbor 12 which is facing the machine spindle.

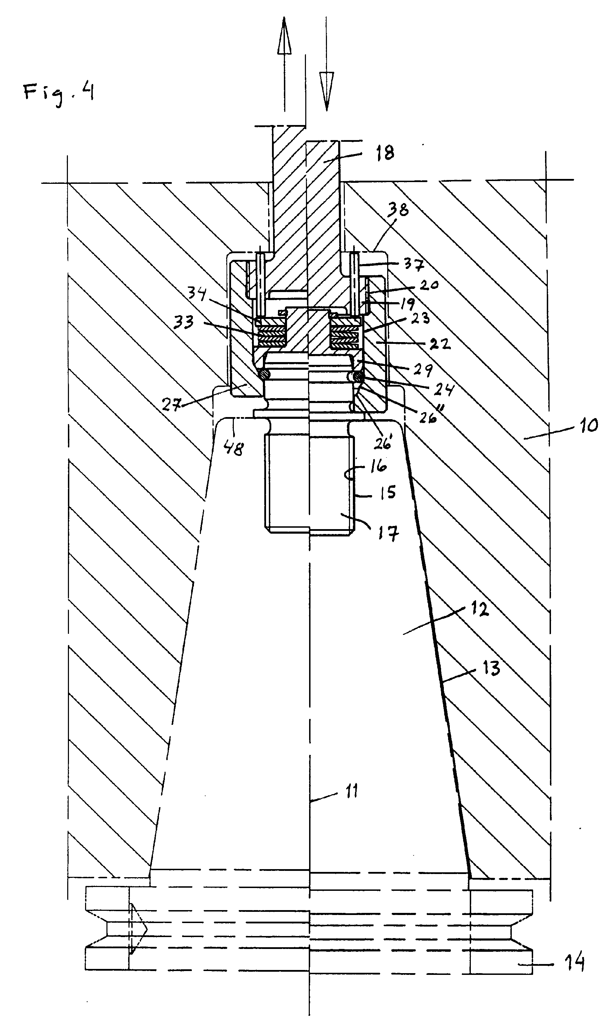

In the embodiment shown the draw bar 18 is arranged axially behind the package of spring washers 33. The release movement is accomplished by a suitable press force effected on the draw bar 18 sufficient to press axially downwards the draw bar 18 and the clamping sleeve 22 rigidly connected therewith thereby enabling the locking ring 24 to expand, due to the inclination of transition surface 26'', and adopt the position to the right of central axis 11 as shown in Fig. 4. Hence, the locking ring 24 has been given the possibility to slide along transition surface 26'' and by natural expansion adopting a position in which it is freely exposed from annular recess 25 of the draw tap 17 thus enabling the latter to become axially released to provide for change of tool.

When a new tool arbor 12 is to be mounted in the spindle 10 the axial displacement of the draw bar 18 is effected backwards. What happens is that the locking ring 24 is subjected to compression by arranging it to slide along the transition surface 26'' and successively adopting its position against the abutment surface 26' as is shown to the left of the central axis in Fig. 4. When the real tensile force is built up in the draw bar 18 the arbor is displaced to its fixed position in the conical bore 13 in the spindle 10. The short distance need for displacement of the bar 18 is also needed for axial displacement backwards of the supporting element 29 in relation to the spindle 10. This additional axial displacement is absorbed by the package of spring washers 33 which is compressed to the position shown to the left of the central axis in Fig. 4.

The clamping device has been described herein as useful in a tool clamping system for rotary tools. The invention is, however, also useful for connecting stationary turning tools with a tooling machine as well as in connection with other types of toolholders than traditional arbors.

## Claims

1. Tool clamping device comprising a draw bar (18) that is axially reciprocal inside a machine spindle (10) and arranged to support a tool arbor (12) by means of a releasably and coaxially clamped sleeve (22), the tool arbor (12) being arranged to be carried by a draw tap (17) connected to the clamped sleeve (22) whereby the portion of said draw tap (17) which is facing away from said spindle (10) is integrally or releasably connected with the arbor whereas the opposite end of said draw tap is carried by said clamped sleeve (22) by means of a locking means (24) arranged in abutment with an abutment surface (26') in said sleeve, said locking means (24) in the locked position being partially received in an annular complementarily formed recess (25) on said draw tap (17),**characterised in** that said locking means is a locking ring (24) which is made substantially in the form of an O-ring and consists of a plurality of metal segments (39) interconnected by rubber segments (40).

2. Clamping device according to claim 1, **characterized** in that the lower end of the draw tap (17) has an exterior thread portion (16) for engagement with a corresponding interior thread (15) on the tool arbor (12).

3. Clamping device according to claim 2, **characterized** in that a supporting element (29) biassed by a package of spring washers (33) is provided inside the clamped sleeve (22) in abutment with the locking ring (24).

4. Clamping device according to claim 3, **characterized** in that the supporting element (29) is provided with a neck portion (30), located centrally inside the package of spring washers, and a flange portion (31) with a radial abutment surface (32) against which the spring washers (33) are supported whereas the axially extending portion of said flange portion (31) is arranged to slide against the interior hole wall (23) of the clamped sleeve (22) with a clearance fit whereas the forwardly located end surface of said neck portion (30) is arranged in abutment with said locking ring (24).

5. Clamping device according to any of claims 1-4, **characterized** in that a transition surface (26'') is provided between the inner hole wall (23) and the abutment surface (26') in the clamped sleeve (22), said transition surface being provided as a support surface and inclined in relation to the longitudinal axis of the clamped sleeve.

6. Clamping device according to any of the claims 1-5, **characterized** in that the locking ring (24) and the annular recess (25) for its receipt on the draw tap (17) are in profile smoothly rounded whereby the abutment surface (26') for the receipt of said locking ring (24) has a corresponding rounded profile.

7. Clamping device according to claim 6, **characterized** in that the depth of the recess (25) in the draw tap (17) is substantially equal or less than one half of the diameter of said locking ring (24).

8. Clamping device according to any of the claims 1-7, **characterized** in that the entrance of the clamped sleeve (22), which is faced away from the machine spindle, has been narrowed by provision of a radially inwards extending flange portion (27), the axially extending inner surface (28) of which being provided as a sliding surface against a corresponding guide surface (41) on the draw tap whereby the inner transition surface between surface (28) and hole wall (23) comprises the abutment surface (26') for locking ring (24) and the rear transition surface (26'').

9. Clamping device according to any of the claims 1-8, characterised in that the draw tap (17) is provided with first and second guide surfaces (41, 42) which are axially spaced and intended to facilitate the mounting.

10. Clamping device according to any of the claims 19, **characterized** in that the draw tap (17) has such axial extension so that the axially upper end surface (45) thereof comes into abutment with the lower end surface (46) of supporting element (29) when the device is in its locked position.

## Patentansprüche

1. Werkzeugklemmvorrichtung mit einer Zugstange (18), die im Inneren einer Maschinenspindel (10) axial hin- und herbewegbar ist und so angeordnet ist, daß sie einen Werkzeugdorn (12) mit Hilfe einer lösbar und koaxial geklemmten Hülse (22) haltert, wobei der Werkzeugdorn (12) so angeordnet ist, daß er von einem Zugzapfen (17) getragen wird, der mit der geklemmten Hülse (22) verbunden ist, wobei der Abschnitt des Zugzapfens (17), der von der Spindel (10) abgewandt ist, einstückig oder lösbar mit dem Dorn verbunden ist, während das entgegengesetzte Ende des Zugzapfens von der geklemmten Hülse (22) über eine Verriegelungseinrichtung (24) getragen wird, die in Anlage mit einer Anschlagfläche (26') in der Hülse angeordnet ist, wobei die Verriegelungseinrichtung (24) in der verriegelten Position teilweise in einer ringförmigen, komplementär geformten Aussparung (25) an dem Zugzapfen (17) aufgenommen ist, dadurch gekennzeichnet, daß die Verriegelungseinrichtung ein Verriegelungsring (24) ist, der im wesentlichen in Form eines O-Ringes hergestellt ist und aus einer Mehrzahl von Metallsegmenten (39) besteht, die über Gummisegmente (40) miteinander verbunden sind.

2. Klemmvorrichtung nach Anspruch 1, dadurch gekennzeichnet, daß das untere Ende des Zugzapfens (17) einen äußeren Gewindeabschnitt (16) für den Eingriff mit einem entsprechenden innengewinde (15) des Werkzeugdornes (12) hat.

3. Klemmvorrichtung nach Anspruch 2, dadurch gekennzeichnet, daß ein Halterungselement (29), welches von einem Paket von federnden Unterlegscheiben (33) vorgespannt ist, im inneren der geklemmten Hülse (22) unter Anlage an den Verriegelungsring (24) vorgesehen ist.

4. Klemmvorrichtung nach Anspruch 3, dadurch gekennzeichnet, daß das Halterungselement (29) mit einem Halsabschnitt (30) versehen ist, der zentral innerhalb der Packung von Federscheiben angeordnet ist, und mit einem Flanschabschnitt (31) mit einer radialen Anlagefläche (32) versehen ist, an welcher die Federscheiben (33) sich abstützen, während der sich axial erstreckende Abschnitt des Flanschabschnittes (31) so angeordnet ist, daß er an der inneren, hohlen Wand (23) der geklemmten Hülse (22) mit Spielpassung gleitet, während die vorn liegende Stirnfläche des Halsabschnittes (30) in Anlage mit dem Verriegelungsring (24) angeordnet ist.

5. Klemmvorrichtung nach einem der Ansprüche 1 bis 4, dadurch gekennzeichnet, daß eine Übergangsfläche (26'') zwischen der inneren hohlen Wand (23) und der Anlagefläche (26') in der Klemmhülse (22) vorgesehen ist, wobei die Übergangsfläche als eine Halterungsfläche bereitgestellt wird und bezüglich der Längsachse der geklemmten Hülse geneigt ist.

6. Klemmvorrichtung nach einem der Ansprüche 1 bis 5, dadurch gekennzeichnet, daß der Verriegelungsring (24) und die ringförmige Aussparung (25) für seine Aufnahme auf dem Zugzapfen (17) in ihrem Profil sanft abgerundet sind, wobei die Anlagefläche (26') für die Aufnahme des Verriegelungsringes (24) ein entsprechend abgerundetes Profil hat.

7. Klemmvorrichtung nach Anspruch 6, dadurch gekennzeichnet, daß die Tiefe der Aussparung (25) in der Zugstange (17) im wesentlichen die Hälfte des Durchmessers des Verriegelungsringes oder weniger beträgt.

8. Klemmvorrichtung nach einem der Ansprüche 1 bis 7, dadurch gekennzeichnet, daß der Eingang der Klemmhülse (22), welcher von der Maschinenspindel abgewandt ist, durch Vorsehen eines sich radial nach innen erstreckenden Flanschabschnittes (27) verjüngt ist, wobei die sich axial verjüngende innere Oberfläche (28) als eine Gleitfläche gegenüber einer entsprechenden Führungsfläche (41 ) auf der Zugstange vorgesehen ist, wodurch die innere Übergangsfläche zwischen der Fläche (28) und der Lochwand (23) die Anlagefläche (26') für den Verriegelungsring (24) und die hintere Übergangsfläche (26'') aufweist.

9. Klemmvorrichtung nach einem der Ansprüche 1 bis 8, dadurch gekennzeichnet, daß der Zugzapfen (17) mit ersten und zweiten Führungsflächen (41, 42) versehen ist, die in axialem Abstand liegen und dafür vorgesehen sind, die Montage zu erleichtern.

10. Klemmvorrichtung nach einem der Ansprüche 1 bis 9, dadurch gekennzeichnet, daß die Zugstange (17) ein solches axiales Maß hat, daß die axial obere Stirnfläche (45) derselben in Anlage mit der unteren Stirnfläche (46) des Halterungselementes (29) kommt, wenn sich die Vorrichtung in ihrer verriegelten Stellung befindet.

## Revendications

1. Dispositif de serrage d'outil comprenant une barre formant tirant (18) qui est mobile axialement à va-et-vient à l'intérieur d'une broche de machine (10) et est agencée pour supporter un mandrin (12) d'outil au moyen d'un manchon serré de manière libérable et coaxiale (22), le mandrin (12) d'outil étant agencé pour être porté par un tourillon de traction (17) raccordé au manchon de serrage (22), la partie dudit tourillon de traction (17) qui est opposée à ladite broche (10) étant raccordée d'un seul tenant ou de manière libérable au mandrin tandis que l'extrémité opposée dudit tourillon de traction est portée par ledit manchon serré (22) à l'aide d'un moyen de verrouillage (24) agencé en butée sur une surface de butée (26') dudit manchon, ledit moyen de verrouillage (24) étant partiellement reçu, dans sa position verrouillée, dans un évidement annulaire de forme complémentaire (25) sur ledit tourillon de traction (17), **caractérisé en** ce que ledit moyen de verrouillage est une bague de verrouillage (24) dont la forme est sensiblement celle d'un joint torique et qui consiste en une série de segments métalliques (39) raccordés entre eux par des segments de caoutchouc (40).

2. Dispositif de serrage selon la revendication 1,
**caractérisé** en ce que l'extrémité inférieure du tourillon de traction (17) est pourvue d'une partie extérieure de filet (17) pour venir en prise avec un filet intérieur correspondant (15) formé sur le mandrin (12) d'outil.

3. Dispositif de serrage selon la revendication 2,
**caractérisé** en ce qu'un élément de support (29) sollicité par un paquet de rondelles élastiques bombées (33) est disposé à l'intérieur du manchon serré (22) en butée sur la bague de verrouillage (24).

4. Dispositif de serrage selon la revendication 3,
**caractérisé** en ce que l'élément de support (29) est pourvu d'une partie de col (30), située au centre à l'intérieur du paquet de rondelles élastiques bombées, et d'une partie de bride (31) à surface de butée radiale (32) contre laquelle les rondelles élastiques bombées (33) sont supportées alors que la partie en extension axiale de ladite partie de bride (31) est agencée pour coulisser avec un certain jeu contre la paroi intérieure (23) du trou du manchon serré (22) alors que la surface d'extrémité, située en avant, de ladite partie de col (30) est agencée en butée sur ladite bague de verrouillage (24).

5. Dispositif de serrage selon l'une quelconque des revendications 1 à 4,
**caractérisé** en ce qu'une surface de transition (26'') est disposée entre la paroi intérieure (23) du trou et la surface de butée (26') du manchon serré (22), ladite surface de transition étant réalisée sous forme de surface de support et étant inclinée par rapport à l'axe longitudinal du manchon serré.

6. Dispositif de serrage selon l'une quelconque des revendications 1 à 5,
**caractérisé** en ce la bague de verrouillage (24) et l'évidement annulaire (25) prévu pour sa réception sur le tourillon de traction (17) sont légèrement arrondis en profil tandis que le profil de la surface de butée (26') de réception de ladite bague de verrouillage (24) est arrondi de façon correspondante.

7. Dispositif de serrage selon la revendication 6,
**caractérisé** en ce la profondeur de l'évidement (25) dans le tourillon de traction (17) est sensiblement égale ou inférieure à la moitié du diamètre de ladite bague de verrouillage (24).

8. Dispositif de serrage selon l'une quelconque des revendications 1 à 7,
**caractérisé** en ce l'entrée dudit manchon serré (22) qui est opposée à la broche de machine a été rétrécie par la formation d'une partie de bride (27) s'étendant radialement vers l'intérieur dont la surface intérieure (28) s'étendant axialement est réalisée sous forme de surface de coulissement contre une surface de guidage correspondante (41) formée sur le tourillon de traction, la surface de transition interne entre la surface (28) et la paroi (23) du trou comprenant la surface de butée (26') de la bague de verrouillage (24) et la surface de transition arrière (26'').

9. Dispositif de serrage selon l'une quelconque des revendications 1 à 8,
**caractérisé** en ce le tourillon de traction (17) est pourvu d'une première et d'une deuxième surfaces de guidage (41, 42) qui sont espacées axialement et prévues pour faciliter le montage.

10. Dispositif de serrage selon l'une quelconque des revendications 1 à 9, **caractérisé** en ce l'extension axiale du tourillon de traction (17) est telle que sa surface d'extrémité axialement supérieure (45) vient en butée sur la surface d'extrémité inférieure (46) de l'élément de support (29) lorsque le dispositif est dans sa position verrouillée.
